(19)

Europäisches
Patentamt
European
Patent Office
Office européen
des brevets

(11) **EP 4 600 100 A1**

(12) **EUROPEAN PATENT APPLICATION**

(43) Date of publication:
**13.08.2025 Bulletin 2025/33**

(21) Application number: 25156301.1

(22) Date of filing: **06.02.2025**

(51) International Patent Classification (IPC):
**B60W 10/18** (2012.01)     **B60T 7/22** (2006.01)
**B60W 30/09** (2012.01)     **B60W 30/095** (2012.01)
**B60W 50/14** (2020.01)

(52) Cooperative Patent Classification (CPC):
**B60W 30/0956; B60T 7/22; B60W 10/18;
B60W 30/09; B60W 50/14;** B60W 2520/10;
B60W 2530/18; B60W 2530/201; B60W 2554/20;
B60W 2554/60; B60W 2554/802; B60W 2556/10;
G01S 15/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **07.02.2024  IT 202400002539**

(71) Applicant: **FERRARI S.p.A.**
**41100 Modena (IT)**

(72) Inventors:
• **SECONDI, Andrea**
**41100 MODENA (IT)**
• **DI IORIO, Fabio**
**41100 MODENA (IT)**
• **DE SIMONE, Raffaele**
**41100 MODENA (IT)**

(74) Representative: **Studio Torta S.p.A.**
**Via Viotti, 9**
**10121 Torino (IT)**

(54) **CONTROL SYSTEM FOR A MOTOR VEHICLE AND CONTROL METHOD FOR A MOTOR VEHICLE, AS WELL AS MOTOR VEHICLE**

(57)     The present invention relates to a control system (10) for a motor vehicle (1) comprising a sensory system (11) adapted to detect a potential obstacle (50) and to generate a first informative datum related to a distance (x1) of the motor vehicle (1) from the obstacle (50) at a first time instant ($t_1$) and a second informative datum related to the height (h) of the obstacle (50) relative to the road surface (P) and an electronic control unit (12) operatively connected to the sensory system (11). The electronic control unit (12) is configured to i) receive the first informative datum and the second informative datum from the sensory system (11); ii) verify that the height (h) of the obstacle (50) complies with a safety criterion as a function of the second informative datum; iii) determine the space travelled ($s_{t1;t2}$), in use, by the motor vehicle (1) between the first time instant ($t_1$) and a second time instant ($t_2$) as a function of the first informative datum when the height (h) of the obstacle (50) does not comply with the safety criterion; iv) control a braking system (4) of the motor vehicle (1) and/or signalling means (5) of the motor vehicle (1) on the basis of the first informative datum and of the determined space travelled ($s_{t1;t2}$) to limit the risk of collision between the motor vehicle (1) and the obstacle (50) . The invention further relates to a corresponding vehicle and control method.

FIG. 1

EP 4 600 100 A1

**Description**

<u>CROSS-REFERENCE TO RELATED APPLICATIONS</u>

This patent application claims priority from Italian patent application no. 102024000002539 filed on February 7, 2024, the entire disclosure of which is incorporated herein by reference.

<u>TECHNICAL FIELD</u>

The present invention refers to a control system for a motor vehicle and to a control method for a motor vehicle.

<u>BACKGROUND</u>

Motor vehicles provided with functions assisting the driver during parking manoeuvres are known. These motor vehicles comprise:

- a sensory system adapted to detect the presence of a potential obstacle close to the motor vehicle;
- a signalling device adapted to emit a signal related to the presence of the obstacle; and
- an electronic control unit operatively connected to the sensory system and to the signalling device.

The electronic control unit is configured to receive from the sensory system an informative datum related to the obstacle detected and to command the signalling device to emit the signal as a function of the informative datum.

In further detail, the sensory system is adapted to periodically detect a piece of information related to the distance of the obstacle from the motor vehicle and the electronic control unit is configured to command the signalling device to emit signals differentiated as a function of the distance detected. For example, the signalling device emits an acoustic signal which is audible to the driver and which is intermittent at greater distances from the obstacle and continuous at shorter distances from the obstacle.

In other words, the electronic control unit controls the signalling device as a function of the real-time detections performed by the sensory system.

This approach involves several drawbacks, since the acoustic signal emitted by the signalling device is representative of the obstacles instantly falling within the detection range of the sensory system. Obstacles that were detected at first and subsequently fall outside the detection range of the sensory system due to the movement of the motor vehicle are no longer signalled to the driver.

The risk for these obstacles not to be signalled to the driver is greater when the height thereof relative to the road surface is moderate. This applies, for example, to sidewalks or to some kinds of road marking which are raised relative to the road surface.

Moreover, recently, in at least some automotive segments, the automotive design has favoured bodies characterized by increasingly lower heights relative to the road surface. This trend has increased the risk of collisions with obstacles and, therefore, of damage to body components.

In the light of the drawbacks described above, the need is felt to reduce the risk of collisions between motor vehicles and obstacles located along their path, in particular those having moderate height relative to the road surface.

An object of the invention is to satisfy the need set forth above, preferably in a simple and cost-effective manner.

<u>DESCRIPTION OF THE INVENTION</u>

The object is achieved by a control system for a motor vehicle and by a control method for a motor vehicle as defined in the independent claims. The dependent claims define particular embodiments of the invention.

<u>BRIEF DESCRIPTION OF THE DRAWINGS</u>

In the following, an embodiment of the invention is described for a better understanding thereof, by way of nonlimiting example and with reference to the accompanying drawings, wherein:

- Figure 1 is a schematic side view of a motor vehicle comprising a control system according to the present invention and arranged at a first distance from an obstacle;
- Figure 2 is a schematic side view of the motor vehicle of Figure 1 arranged at a second distance from the obstacle; and
- Figure 3 is a flowchart illustrating the steps of the control method according to the present invention.

## EMBODIMENTS OF THE INVENTION

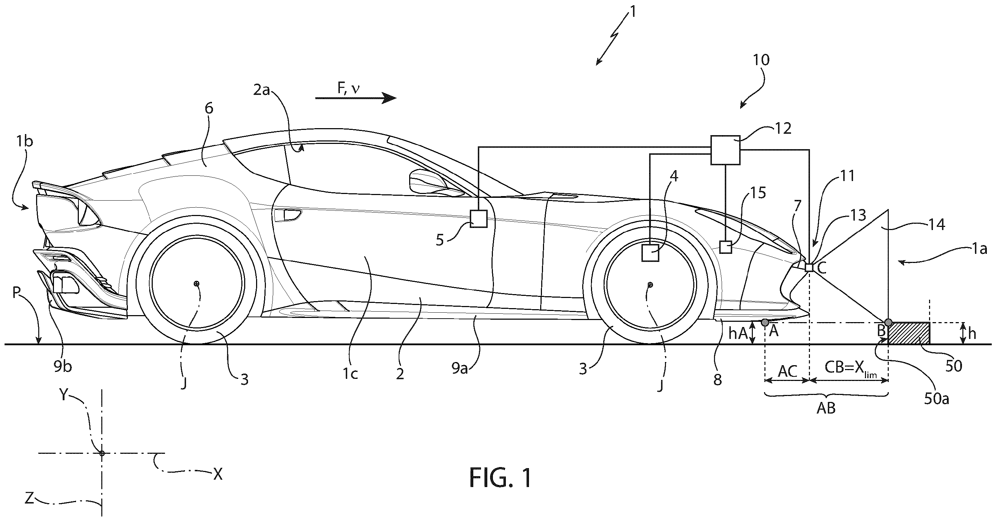

In Figure 1, reference numeral 1 is used to indicate, as a whole, a motor vehicle comprising:

- a frame 2;
- a plurality of wheels 3 rotatable relative to the frame 2 about respective rotation axes J;
- a braking system 4 adapted to stop or slow down the rotation of at least some of the wheels 3 about the respective rotation axes J; and
- signalling means 5 adapted to signal the approach to a potential obstacle 50; and
- a control system 10 according to the present invention.

In particular, and without this involving any loss of generality, the motor vehicle 1 is a sports car.

The motor vehicle 1 can be associated with an integral reference system comprising:

- a longitudinal extension axis X;
- an axis Z which, in use, is vertical relative to the road surface P on which the wheels 3 rest, and directed perpendicular to the axis X; and
- an axis Y directed perpendicular to the axes X and Z.

Additionally, the motor vehicle 1 comprises a front end 1a and a rear end 1b relative to a forward moving direction F of the motor vehicle 1. In detail, the front end 1a and the rear end 1b are opposite each other along the axis X.

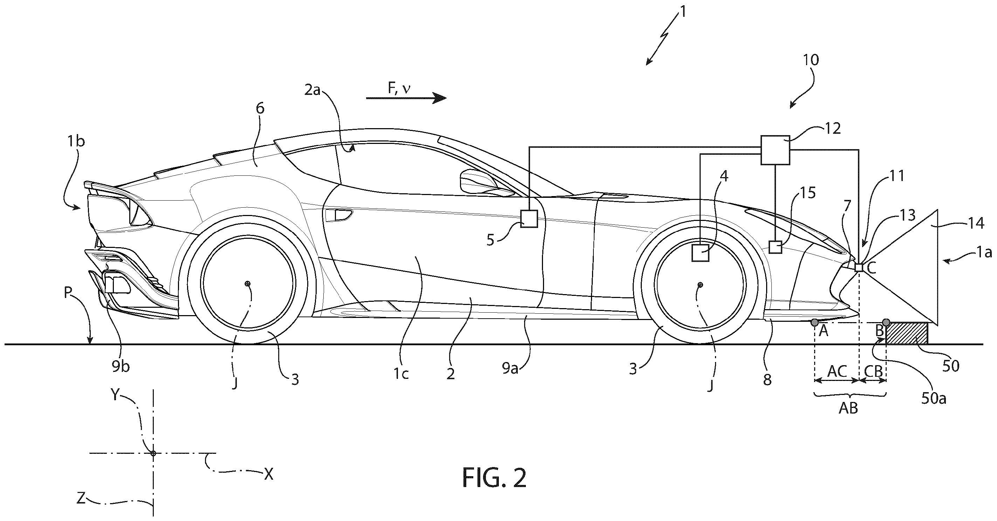

The motor vehicle 1 further comprises a right side portion 1c (illustrated in Figures 1 and 2) and a left side portion (not illustrated) which extend between the front end 1a and the rear end 1b parallel to the axis X and which are opposite each other parallel to the axis Y. Specifically, the right and left side portions are defined referring to the travel direction identified by the arrow of the forward movement direction F (Figures 1 and 2).

It is also possible to define a speed v of the motor vehicle 1 along the direction F. In general, the speed v is variable over time.

In detail, the motor vehicle 1 comprises a sensory system 15 adapted to detect an informative datum associated with the speed v of the motor vehicle relative to a reference system, for example integral with the road surface P. In further detail, the sensory system 15 comprises a speed sensor.

The motor vehicle 1 also comprises a body 6 or outer shell which is connected to the frame 2 and covers the same.

The body 6 comprises a front bumper 7 arranged at the front end 1a and a splitter 8 also arranged at the front end 1a and below the bumper 7 along the axis Z. In detail, the splitter 8 is closer to the road surface P than the bumper 7.

Preferably, the body 6 also comprises:

- side strips (or spoilers) 9a at the right side portion 1c and the left side portion; and
- a rear bumper 9b arranged at the rear end 1b.

The motor vehicle 1 also comprises a passenger compartment 2a which is fixed relative to the frame 2 and which is adapted to accommodate a driver and possibly one or more passengers.

The obstacle 50 shall be understood as a body external to the motor vehicle 1 capable of impeding or hindering the travel of the motor vehicle 1. In the illustrated embodiment, the obstacle 50 is solid and fixed relative to the road surface P and is provided with a height h relative to the road surface P, which is measured parallel to the axis Z.

The obstacle 50 further comprises a face 50a facing the motor vehicle 1, in particular the front end 1a. In detail, the face 50a comprises a point B at the upper end thereof along the axis Z.

For example, the obstacle 50 is a traffic island, a sidewalk, an edging, a road kerb or a road marking element.

In particular, in case the obstacle 50 is provided with a variable height parallel to the axis Z, the height h means the maximum height relative to the road surface P along the axis Z.

Nevertheless, the obstacle 50 could be movable relative to the road surface P.

The signalling means 5 comprise a buzzer adapted to emit an acoustic signal. In detail, the acoustic signal is audible inside the passenger compartment 2a.

Advantageously, the control system 10 comprises, in turn:

- a sensory system 11 adapted to detect the potential obstacle 50 and to generate a first informative datum related to a distance x1 of the motor vehicle 1 from the obstacle 50 at a time instant $t_1$ and a second informative datum related to the height h of the obstacle 50; and
- an electronic control unit 12 operatively connected to the sensory system 11.

The electronic control unit 12 is configured to:

- receive the first informative datum and the second informative datum from the sensory system 11;
- verify that the height h of the obstacle 50 complies with a safety criterion on the basis of the second informative datum;
- determine the space travelled $s_{t1;t2}$ by the motor vehicle 1 in the time interval between the time instant $t_1$ and a time instant $t_2$ subsequent to the time instant $t_1$, when the height h of the obstacle 50 does not comply with the safety criterion;
- control the braking system 4 and/or the signalling means 5 on the basis of the first informative datum and of the space travelled $s_{t1;t2}$ to limit the risk of collision between the motor vehicle 10 and the potential obstacle 50.

In detail, the electronic control unit 12 is operatively connected to the sensory system 15 and is configured to calculate the space travelled $s_{t1;t2}$ by multiplying the speed v of the motor vehicle 1 in the time interval between the time instant $t_1$ and the time instant $t_2$ by the time interval ($s_{t1;t2} = v(t_2 - t_1)$. In further detail, the speed v taken into account in the calculation is the mean speed of the motor vehicle 1 between the time instant $t_1$ and the time instant $t_2$.

The sensory system 11 comprises an obstacle detector 13 arranged at the front end 1a. In the illustrated embodiment, the detector 13 is arranged at the bumper 7 and is spaced apart, in particular raised, relative to the splitter 8 parallel to the axis Z.

The detector 13 is of the ultrasonic or electromagnetic type. Alternatively or additionally, the detector 13 comprises a video camera.

In detail, the detector 13 defines a point C of the motor vehicle 1. In further detail, the distance x1 is measured between point C and point B of the obstacle 50 parallel to the axis X or the direction F.

Preferably, but not necessarily, the detector 13 is a parking sensor of the motor vehicle 1.

The detector 13 is associated with a detection field 14 which is illustrated only schematically in Figures 1 and 2. In detail, the detection range 14 is three-dimensional and extends parallel to the axis X between a minimum distance and a maximum distance; additionally, for each point of the extension of the detection range 14 between the minimum distance and the maximum distance, the detection range 14 extends between a respective minimum extent and a respective maximum extent parallel to the axis Z.

The motor vehicle 1 further comprises a point A at the portion of the body 6 closer to the road surface P parallel to the axis Z. Additionally, point A is interposed between point C and the rear end 1b parallel to the axis X. Furthermore, in the illustrated embodiment, point A is part of the splitter 8.

It is also possible to define:

- a distance AC between point A and point C parallel to the axis X;
- a distance CB between point C and point B parallel to the axis X; and
- a distance AB between point A and point B parallel to the axis X.

The distance AB is equal to the sum of the distance AC and the distance CB (AB = AC + CB). Specifically, the distance AC is constant over time; the distance CB depends on the relative position between the motor vehicle 1 and the obstacle 50 and is, therefore, variable over time, in general.

In further detail, the distance CB at the time instant $t_1$ coincides with the distance x1 detected by the sensory system 11.

It is also possible to define a limit distance $x1_{lim}$, which is equal to the minimum distance parallel to the axis X between point C and point B, for which point B is part of the detection range 14. In other words, when the distance CB takes a value equal to the limit distance $x1_{lim}$, point B falls within the detection range 14 and is detectable by the sensory system 11 (Figure 1); when the distance CB takes a smaller value than the limit distance $x1_{lim}$, point B is outside the detection range 14 and, therefore, is not directly detectable by the sensory system 11 (Figure 2).

The electronic control unit 12 is configured to calculate the distance CB at the time instant $t_2$ by subtracting from the distance x1 the space travelled $s_{t1;t2}$ by the motor vehicle 1 between the time instant $t_1$ and the time instant $t_2$ while approaching the obstacle 50.

The electronic control unit 12 is also configured to:

- store, in one or more memories, a distance threshold value $d\theta1$ and a distance threshold value $d\theta2$ which is smaller than the distance threshold value $d\theta1$;
- command the signalling means 5 to signal the approach to the obstacle 50 when the distance AB is smaller than the distance threshold value $d\theta1$ and greater than the distance threshold value $d\theta2$; and
- command the signalling means 5 to signal the approach to the obstacle 50 and command the braking system 4 to stop or slow down the rotation of at least some of the wheels 3 when the distance AB is smaller than the distance threshold value $d\theta2$.

Preferably, the distance threshold value d$\theta$1 is equal to the sum of the distance x1$_{lim}$ and the distance AC (d$\theta$1 = x1$_{lim}$ + AC); the distance threshold value d$\theta$2 being equal to the distance AC.

In other words, when the distance AB is smaller than the distance threshold value d$\theta$2, the obstacle 50 is at least partly arranged between the front end 1a and the splitter 8 parallel to the axis X.

Preferably, but not necessarily, the signalling means 5 are configured to emit:

- an acoustic signal of a first type when the distance AB is smaller than the distance threshold value d$\theta$1 and greater than the distance threshold value d$\theta$2; and
- an acoustic signal of a second type when the distance AB is smaller than the distance threshold value d$\theta$2.

For example, the acoustic signal of the second type is a sound repeated at a greater repetition rate than that of the acoustic signal of the first type.

The electronic control unit 12 is also configured to store, in one or more memories, a height threshold value h$\theta$ and the safety criterion requires the height h of the obstacle 50 to be smaller than the height threshold value h$\theta$ (h < h$\theta$).

In further detail, the height threshold value h$\theta$ coincides with or is proportional to the height hA of point A relative to the road surface P (h$\theta$ = $\alpha$hA; $\alpha \geq 1$; $\alpha \in Q$).

More in general, the electronic control unit 12 is configured to:

- determine the space travelled s$_{t1;t2}$, S$_{t2;t3}$,..., s$_{tk-1;tk}$ by the motor vehicle 1 at subsequent time instants t$_1$, t$_2$, t$_3$, ..., t$_{k-1}$, t$_k$ when the height h of the obstacle 50 does not comply with the safety criterion;
- control the braking system 4 and/or the signalling means 5 on the basis of the first informative datum and of the space travelled s$_{t1;t2}$, S$_{t2;t3}$,..., s$_{tk-1;tk}$ among subsequent time instants t$_1$, t$_2$; t$_2$, to limit the risk of collision between the motor vehicle 10 and the potential obstacle 50.

The electronic control unit 12 is configured to calculate the distance CB in a generic time instant t$_n$ by subtracting from the distance x1 the sum of the spaces travelled by the motor vehicle 1 from the time instant t$_1$ to the time instant t$_n$ while approaching the obstacle 50.

In detail, the space travelled between two subsequent time instants t$_1$, t$_2$; t$_2$, t$_3$;...; t$_{k-1}$, t$_k$ is calculated by multiplying the speed v of the motor vehicle 1 by the time interval between these subsequent time instants. In further detail, the speed v taken into account in the calculation is the mean speed of the motor vehicle 1 in the time interval between two subsequent time instants t$_1$, t$_2$; t$_2$, t$_3$;...; t$_{k-1}$, t$_k$.

In other words, the control unit 12 is configured to determine the distance CB at the time instant t$_n$ on the basis of Formula (a):

$$(a) \qquad CB(t_n) = x_1 - \sum_{k=2}^{n} v_{k-1,k}(t_k - t_{k-1})$$

Preferably, the time interval between subsequent time instants t$_1$, t$_2$; t$_2$, t$_3$;...; t$_{k-1}$, t$_k$ is constant over time and equal to a sampling time t$_c$. In this case, the control unit 12 is configured to determine the distance CB at the time instant t$_n$ on the basis of Formula (b):

$$(b) \qquad CB(t_n) = x_1 - \sum_{k=2}^{n} v_{k-1,k}t_c$$

The operation of the control system 10 according to the invention is described below.

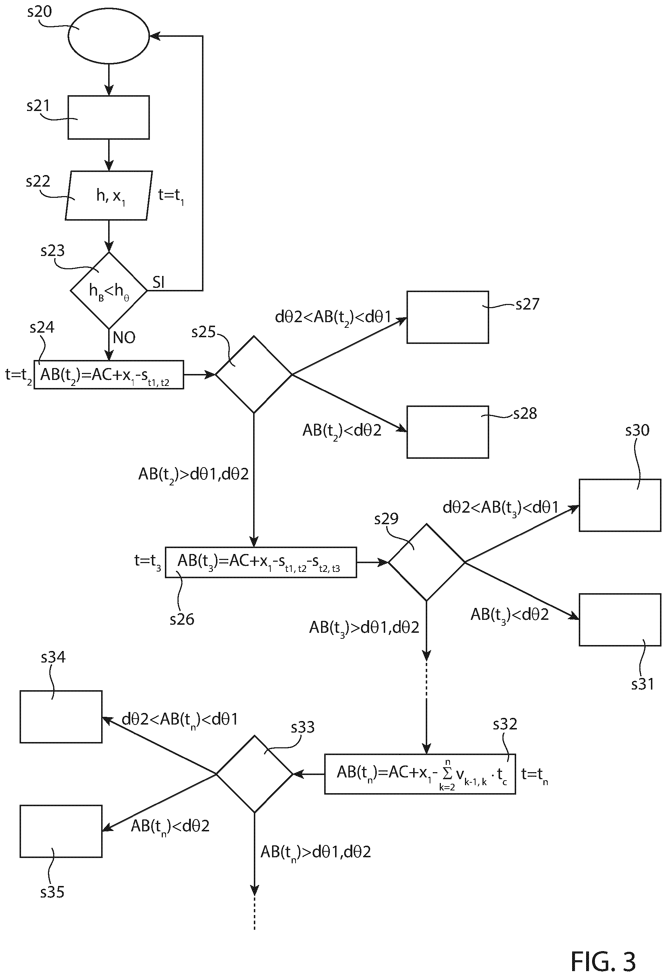

In use, the sensory system 11 periodically detects the presence of potential obstacles within the detection range 14 (block s20 in Figure 3). When the sensory system 11 identifies an obstacle 50 at the time instant t$_1$ (block s21 in Figure 3), it detects the height h thereof and the distance x1 (block s22 in Figure 3).

The electronic control unit 12 receives the first informative datum and the second informative datum from the sensory system 11 and compares the height h with the height threshold value h$\theta$ (block s23 in Figure 3). If the height h is smaller than the height threshold value h$\theta$, the obstacle 50 is not sufficiently high relative to the road surface P to collide with the splitter 8; if the height h is greater than the height threshold value h$\theta$, the electronic control unit 12 calculates the distance AB at subsequent time intervals t$_2$, t$_3$, ..., t$_{k-1}$, t$_k$.

In further detail, the electronic control unit 12 calculates the distance AB at the time instant t$_2$ subsequent to the time instant t$_1$ by adding the distance AC to the distance x1 and subtracting the space travelled s$_{t1;t2}$ while approaching the obstacle 50 (block s24 in Figure 3). Then, the electronic control unit 12 compares the distance AB thus calculated at the time instant t$_2$ with the distance threshold values d$\theta$1 and d$\theta$2 (block s25 in Figure 3).

Specifically, the electronic control unit 12 commands the signalling means 5 to signal the approach to the obstacle 50 when the distance AB is smaller than the distance threshold value d$\theta$1 and greater than the distance threshold value d$\theta$2

(block s27 in Figure 3) or commands the signalling means 5 to signal the approach to the obstacle 50 and commands the braking system 4 to stop or slow down the rotation of at least some of the wheels 3 when the distance AB is smaller than the distance threshold value $d\theta2$ (block s28 in Figure 3).

If, instead, the distance AB at the time instant $t_2$ is greater than the distance threshold values $d\theta1$ and $d\theta2$, the electronic control unit 12 calculates the distance AB at the time instant $t_3$ subsequent to the time instant $t_2$ by adding the distance AC to the distance x1 and subtracting the space travelled $s_{t1;t2}$ and the space travelled $s_{t2;t3}$ while approaching to the obstacle 50 (block s26 in Figure 3).

Then, the electronic control unit 12 compares the distance AB thus calculated at the time instant $t_3$ with the distance threshold values $d\theta1$ and $d\theta2$ (block s29 in Figure 3). In the light of this comparison, the electronic control unit 12 determines whether to intervene on the signalling means 5 (block s30 in Figure 3), on the signalling means 5 and on the braking system 4 (block s31 in Figure 3) or whether to calculate the distance AB at a time instant $t_n$ subsequent to the time instant $t_3$ (blocks s32, s33, s34 and s35 in Figure 3).

When the signalling means 5 emit the signal, the driver of the motor vehicle 1 is informed of the risk of collision with the obstacle 50 and is thus induced to perform a corrective manoeuvre (for example, to slow down or completely stop the motor vehicle 1).

When, instead, the driver is late in performing a corrective manoeuvre and/or the obstacle 50 is dangerously close to the splitter 8, the electronic control unit 12 commands the braking system 4 to slow down or stop the motor vehicle 1 automatically.

Based on the foregoing, the advantages of the control system 10, of the motor vehicle 1 and of the control method according to the invention are evident.

In particular, since the control unit 12 evaluates the distance from the obstacle 50 as a function of the space travelled by the motor vehicle 1, the approach to the obstacle 50 is determined and, therefore, signalled to the driver of the motor vehicle 1 even when the obstacle 50 falls outside the detection range 14 of the sensory system 11. Thus, the risk of collisions and, therefore, of damage to the components of the body 6 - specifically, to the splitter 8 - is significantly reduced. This applies also and especially to obstacles having moderate height relative to the road surface and is particularly advantageous during parking manoeuvres.

Since the electronic control unit 12 is configured to command the signalling means 5 to signal the approach to the obstacle 50 when the distance AB is smaller than the distance threshold value $d\theta1$ and greater than the distance threshold value $d\theta2$, the driver is informed of the risk of collision, so as to induce a corrective intervention.

Since the electronic control unit 12 is configured to command the braking system 4 to stop or slow down the rotation of at least some of the wheels 3 when the distance AB is smaller than the distance threshold value $d\theta2$, it is possible to further reduce the risk of collision when the obstacle 50 is particularly close to the splitter 8.

Finally, it is clear that the control system 10, the motor vehicle 1 and the control method according to the invention can be modified and varied without, however, departing from the scope of protection defined by the claims.

In particular, the splitter 8 could be integrated in the bumper 7.

The signalling means 5 could comprise, in addition to the buzzer or in place of the buzzer:

- a transreceiver adapted to be remotely operatively connected to a mobile device, for example, a smartphone or a tablet. In detail, the transreceiver is adapted to send to the mobile device the signal related to the approach to the obstacle 50; and/or
- a control panel, for example an infotainment system arranged in the passenger compartment 2a. In detail, the control panel is adapted to generate an acoustic and/or visual notification associated with the approach to the obstacle 50.

The sensory system 11 could comprise more than one detector 13. In detail, the sensory system 11 could comprise more than one detector 13 arranged at the front end 1a, and/or one or more detectors 13 arranged at the rear end 1b, and/or one or more detectors 13 arranged at the right side end 1c, and/or one or more detectors 13 arranged at the left side end.

In view of the above, the obstacle 50 could face the rear end 1b and/or the right side portion 1c and/or the left side portion.

Point A could belong to a different component from the splitter 8. For example, point A could be a point of the side strips 9a or the rear bumper 9b.

**Claims**

1. A control system (10) for a motor vehicle (1) comprising:

- a sensory system (11) adapted to detect a potential obstacle (50) and to generate a first informative datum related to a distance (x1) of said motor vehicle (1) from said obstacle (50) at a first time instant ($t_1$) and a second informative datum related to the height (h) of said obstacle (50) relative to the road surface (P); and
- an electronic control unit (12) operatively connected to said sensory system (11);

said electronic control unit (12) being configured to:

- receive said first informative datum and said second informative datum from said sensory system (11);
- verify that the height (h) of said obstacle (50) complies with a safety criterion as a function of said second informative datum;
- determine the space travelled ($s_{t1;t2}$), in use, by said motor vehicle (1) between said first time instant ($t_1$) and a second time instant ($t_2$) as a function of said first informative datum, when the height (h) of said obstacle (50) does not comply with said safety criterion; said second time instant ($t_2$) being subsequent to said first time instant ($t_1$);
- control a braking system (4) of said motor vehicle (1) and/or signalling means (5) of said motor vehicle (1) on the basis of said first informative datum and of said determined space travelled ($s_{t1;t2}$) to limit, in use, the risk of collision between said motor vehicle (1) and said potential obstacle (50).

2. The control system according to claim 1, wherein said electronic control unit (12) is configured to store a height threshold value (hθ) and said safety criterion requires the height (h) of said obstacle (50) to be smaller than said height threshold value (hθ).

3. The control system according to claim 2, wherein said height threshold value (hθ) coincides with or is proportional to the height (hA) of a point (A) of said motor vehicle (1) relative to said road surface (P).

4. The control system according to any one of the foregoing claims, wherein said electronic control unit (12) is configured to determine said space travelled ($s_{t1;t2}$) by multiplying a mean speed (v) of said motor vehicle (1) between said first time instant ($t_1$) and said second time instant ($t_2$) by the time interval between said first time instant ($t_1$) and said second time instant ($t_2$).

5. A motor vehicle (1) comprising:

- a frame (2);
- a plurality of wheels (3) rotatable relative to said frame (2) about respective rotation axes (J);
- a braking system (4) adapted to stop or slow down the rotation of at least some of said wheels (3) about the respective rotation axes (J);
- signalling means (5) adapted to signal the approach to a potential obstacle (50); and
- a control system (10) according to any one of the foregoing claims.

6. The motor vehicle according to claim 5, wherein said electronic control unit (12) is configured to:

- store a first distance threshold value (dθ1) and a second distance threshold value (dθ2); said second distance threshold value (dθ2) being smaller than said first distance threshold value (dθ1);
- command said signalling means (5) to signal the approach to said potential obstacle (50) when said distance (x1) or a further distance (AB) between a point (A) of said motor vehicle (1) and said potential obstacle (50) is smaller than said first distance threshold value (dθ1) and greater than said second distance threshold value (dθ2);
- command said signalling means (5) to signal the approach to said potential obstacle (50) and command the braking system (4) to stop or slow down the rotation of at least some of said wheels (3) when said distance (x1) or said further distance (AB) is smaller than said second distance threshold value (dθ2).

7. The motor vehicle according to claim 6, wherein said motor vehicle (1) further comprises a body (6) connected to said frame (2);
said point (A) being the portion of said body (6) closest to the road surface (P).

8. A method of controlling a motor vehicle (1) comprising the steps of:

i) detecting a potential obstacle (50) by means of a sensory system (11) of said motor vehicle (1) and generating a first informative datum related to a distance (x1) of said motor vehicle (1) from said obstacle (50) at a first time instant ($t_1$) and a second informative datum related to the height (h) of said obstacle (50) relative to the road surface (P); and

ii) receiving said first informative datum and said second informative datum by means of an electronic control unit (12) of said motor vehicle (1);

iii) verifying that the height (h) of said obstacle (50) complies with a safety criterion as a function of said second informative datum by means of said electronic control unit (12);

iv) determining by means of said electronic control unit (12) the space travelled ($s_{t1;t2}$) by said motor vehicle (1) between said first time instant ($t_1$) and a second time instant ($t_2$) as a function of said first informative datum, when the height (h) of said obstacle (50) does not comply with said safety criterion; said second time instant ($t_2$) being subsequent to said first time instant ($t_1$);

v) controlling a braking system (4) of said motor vehicle (1) and/or signalling means (5) of said motor vehicle (1) by means of said electronic control unit (12) on the basis of said first informative datum and said space travelled ($s_{t1;t2}$) determined during said step iv), to limit the risk of collision between said motor vehicle (1) and said potential obstacle (50).

9. The method according to claim 8, wherein during said step iv) said space travelled ($s_{t1;t2}$) is determined by multiplying a mean speed (v) of said motor vehicle (1) between said first time instant ($t_1$) and said second time instant ($t_2$) by the time interval between said first time instant ($t_1$) and said second time instant ($t_2$).

10. The method according to claim 8 or 9, comprising the further steps of:

vi) storing by means of said electronic control unit (12) a first distance threshold value ($d\theta1$) and a second distance threshold value ($d\theta2$); said second distance threshold value ($d\theta2$) being smaller than said first distance threshold value ($d\theta1$);

vii) commanding by means of said electronic control unit (12) said signalling means (5) to signal the approach to said potential obstacle (50) when said distance (x1) or a further distance (AB) between a point (A) of said motor vehicle (1) and said potential obstacle (50) is smaller than said first distance threshold value ($d\theta1$) and greater than said second distance threshold value ($d\theta2$);

viii) commanding by means of said electronic control unit (12) said signalling means (5) to signal the approach to said potential obstacle (50) and commanding said braking system (4) to stop or slow down the rotation of at least some of said wheels (3), when said distance (x1) or said further distance (AB) is smaller than said second distance threshold value ($d\theta2$).

FIG. 1

EP 4 600 100 A1

FIG. 2

EP 4 600 100 A1

s20

s21

s22 $h, x_1$ $t=t_1$

s23 $h_B < h_\theta$ SI

s24 NO

$t=t_2$ $AB(t_2)=AC+x_1-s_{t1,t2}$

s25

$d\theta2<AB(t_2)<d\theta1$ s27

$AB(t_2)<d\theta2$ s28

$AB(t_2)>d\theta1,d\theta2$

$t=t_3$ $AB(t_3)=AC+x_1-s_{t1,t2}-s_{t2,t3}$

s26

s29

$d\theta2<AB(t_3)<d\theta1$ s30

$AB(t_3)<d\theta2$

s31

$AB(t_3)>d\theta1,d\theta2$

s34

$d\theta2<AB(t_n)<d\theta1$ s33

s32

$AB(t_n)=AC+x_1-\sum_{k=2}^{n}v_{k-1,k}\cdot t_c$ $t=t_n$

$AB(t_n)<d\theta2$

s35

$AB(t_n)>d\theta1,d\theta2$

FIG. 3

Europäisches
Patentamt

European
Patent Office

Office européen
des brevets

## EUROPEAN SEARCH REPORT

**Application Number**

EP 25 15 6301

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2016 111079 A1 (VALEO SCHALTER & SENSOREN GMBH [DE]) 21 December 2017 (2017-12-21) * paragraph [0023] - paragraph [0048]; figures 1-3 * | 1-10 | INV. B60W10/18 B60T7/22 B60W30/09 B60W30/095 B60W50/14 |
| X | DE 10 2020 121785 A1 (BAYERISCHE MOTOREN WERKE AG [DE]) 24 February 2022 (2022-02-24) * paragraph [0007] - paragraph [0020]; figures 1-3 * | 1-10 | |
| A | DE 10 2016 117705 A1 (VALEO SCHALTER & SENSOREN GMBH [DE]) 22 March 2018 (2018-03-22) * paragraph [0003] - paragraph [0017] * * paragraph [0045] - paragraph [0055] * | 1-10 | |
| A | US 2023/373472 A1 (WATANABE KOSUKE [JP]) 23 November 2023 (2023-11-23) * paragraph [0063] - paragraph [0069]; figures 8A-10 * | 1-10 | TECHNICAL FIELDS SEARCHED (IPC) B60W B60T G01S |

The present search report has been drawn up for all claims

| Place of search | Date of completion of the search | Examiner |
|---|---|---|
| Munich | 10 June 2025 | Engelhardt, Helmut |

EPO FORM 1503 03.82 (P04C01)

**ANNEX TO THE EUROPEAN SEARCH REPORT
ON EUROPEAN PATENT APPLICATION NO.**

EP 25 15 6301

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2025

| Patent document cited in search report | Publication date | Patent family member(s) | | Publication date |
|---|---|---|---|---|
| DE 102016111079 A1 | 21-12-2017 | NONE | | |
| DE 102020121785 A1 | 24-02-2022 | NONE | | |
| DE 102016117705 A1 | 22-03-2018 | NONE | | |
| US 2023373472 A1 | 23-11-2023 | CN | 117068146 A | 17-11-2023 |
| | | JP | 7614565 B2 | 16-01-2025 |
| | | JP | 2023169492 A | 30-11-2023 |
| | | US | 2023373472 A1 | 23-11-2023 |

EPO FORM P0459

For more details about this annex : see Official Journal of the European Patent Office, No. 12/82

**REFERENCES CITED IN THE DESCRIPTION**

**Patent documents cited in the description**

- IT 102024000002539